# EUROPÄISCHE PATENTSCHRIFT

(11) **EP 2 383 149 B1**
(45) Veröffentlichungstag und Bekanntmachung des Hinweises auf die Patenterteilung: **14.11.2012**
(21) Anmeldenummer: 11175430.5
(22) Anmeldetag: 23.08.2007
(51) Int. Cl.: B60K 37/02

(54) **Vorrichtung zum Fixieren eines Lademittels**
Device for retaining a transport container
Dispositif de fixation d'un matériau de chargement

(30) Priorität: 15.12.2006 DE 102006061508
(43) Veröffentlichungstag der Anmeldung: 02.11.2011
(62) Teilanmeldung aus: 07016520.4
(73) Patentinhaber: BOS GmbH & Co. KG, 73760 Ostfildern (DE)
(72) Erfinder: Bohlke, Hartmut, 42369 Wuppertal (DE); Teulings, Peter, 42399 Wuppertal (DE); Göbbels, Andreas, 51515 Kürten (DE); Salewski, Jürgen, 40599 Düsseldorf (DE)
(74) Vertreter: Patentanwälte Ruff, Wilhelm, Beier, Dauster & Partner

(56) Entgegenhaltungen:
- EP-A- 1 038 726
- DE-A1- 19 851 392
- DE-T2- 69 915 528
- JP-A- 2003 341 431

## Beschreibung

Die Erfindung betrifft eine Vorrichtung zum Fixieren eines Lademittels an einem Fahrzeugboden nach dem Oberbegriff des Anspruchs 1.

Aus der DE 101 49 186 A1 ist eine Lastöse für einen Laderaum eines Kraftfahrzeugs bekannt. An der Lastöse sind Gurte oder ähnliche Befestigungsmittel zum Sichern von Gegenständen in einem Laderaum des Kraftfahrzeugs befestigbar. Die Lastösen sind dabei in einer schienenförmigen Halterung angeordnet, entlang der schienenförmigen Halterung verschiebbar und in dieser an bestimmten Positionen fixierbar. Die Halterung weist hierfür einen Sperrstift auf, welcher in eine am Boden der Leiste angebrachte Lochschiene eingreift.

Die gattungsbildunde EP 1 038 726 A1 offenbart eine Vorrichtung für einen Laderaum eines Kraftfahrzeugs, bei der zum Fixieren eines Lademittels an einem Laderaumboden fahrzeugseitig wenigstens eine Führungsschiene vorgesehen ist, in der ein Sperrelement bewegbar gelagert ist. Das Sperrelement kann in einer ersten Position aus der Schiene in Fahrzeughochrichtung entnommen werden. In einer in der Führungsschiene fixierten zweiten Stellung weist das Sperrelement Abschnitte auf, die Führungsbereiche der Führungsschiene in Fahrzeughochrichtung hintergreifen. Zudem kann das Sperrelement innerhalb der Führungsschiene derart bewegt werden, dass es nach oben aus der Führungsschiene entnehmbar ist.

Aus der US 2005/0175426 A1sind Lastösen bekannt, welche eine Sperrklinke aufweisen, die in einer ersten Position relativ zu der Schiene in Längsrichtung der Schiene verschiebbar sind und die relativ zu der Schiene verschwenkbar sind, so dass die Klinke unter Haken der Schiene greift und dadurch eine Entnahme der Lastöse aus der Schiene verhindert.

Aus der US 5,544,988 ist weiter ein verschiebbarer Ladeboden für einen Laderaum bekannt, wobei eine Verschiebung des Ladebodens durch Sperrklinken, welche in fahrzeugseitige Nuten eingreifen, gesperrt ist. Die Sperrklinken sind über ein Zugseil zum Entsperren verschwenkbar.

Es ist Aufgabe der vorliegenden Erfindung, eine Vorrichtung zum Fixieren eines Lademittels zu schaffen, wobei das Lademittel einfach von einem Fahrzeugboden entfernbar und sicher an diesem fixierbar ist.

Diese Aufgabe wird gelöst durch eine Vorrichtung zum Fixieren eines Lademittels an einem Fahrzeugboden mit den Merkmalen des Anspruchs 1.

Das Betätigungselement verhindert eine Bewegung des Sperrelements relativ zu der Schiene in Z-Richtung. Dadurch wird ein Lademittel sicher an dem Fahrzeugboden fixiert. Durch gezieltes Betätigen des Betätigungselements ist eine Bewegung des Sperrelements in Öffnungsrichtung, d.h ein Entriegeln, möglich. Da ein Entriegeln des Sperrelements nur indirekt, nämlich durch Bewegen des Betätigungselements, möglich ist, wird auch bei hohen angreifenden Kräften an dem Sperrelement ein unerwünschtes Lockern des Sperrelements verhindert. Durch das Betätigungselement ist eine besonders sichere Gestaltung des Lademittels möglich.

Erfindungsgemäß weist das Betätigungselement eine Kulissenführung auf, in welcher ein Stift zur Bewegung des Sperrelements gelagert ist. Durch die Kulissenführung ist eine Bewegung des Betätigungselements in eine Entriegelungsrichtung direkt in eine Bewegung des Sperrelements zum Entriegeln, beispielsweise eine Schwenkbewegung, transformierbar. Die Kulissenführung sperrt weiter eine Bewegung des Sperrelements.

Gemäß der Erfindung ist die Kulissenführung für den mit dem Rasthaken zusammenwirkenden Stift nach Art einer Herzkurve oder L-förmig gestaltet. Die Herzkurve ist eine in sich geschlossene Kurve, die die Form eines Herzens hat. Durch eine Herzkurve ist es auf einfache Weise möglich, eine Linearverschiebung des Betätigungselements in eine Schwenkbewegung um eine zur Verschieberichtung parallele Achse zu transformieren. Durch die L-förmige Gestaltung der Kulissenführung ist eine einfache Transformation einer translatorischen Bewegung des Betätigungselements in eine Rotationsbewegung um eine dazu senkrechte Schwenkachse möglich. Die Kulissenführung ist in einer vorteilhaften Ausgestaltung derart ausgebildet, dass die Kulissenführung eine Bewegung des Stifts in ungewünschte Richtungen sperrt.

Das Sperrelement ist vorteilhaft in der zweiten Position in Längsrichtung und/oder Z-Richtung in der Schiene verrastet. Die Schiene und/oder das Sperrelement weisen zu diesem Zweck Rastmittel auf. Vorteilhafterweise sind die Schiene und die Sperrklinke mit komplementären Rastmitteln ausgeformt, welche bei der Schwenkbewegung entgegen der Öffnungsrichtung ineinander greifen und bei der Bewegung in Öffnungsrichtung voneinander gelöst werden. Durch derartige Rastmittel ist eine im Wesentlichen formschlüssige Sicherung des Sperrelements in der Schiene möglich.

In einer Ausgestaltung der Erfindung ist das Sperrelement in die Offnungsrichtung verschwenkbar. Ein verschwenkbares Sperrelement ist auf einfache Weise lagerbar. Eine Lagerung des Sperrelements erfolgt in einer vorteilhaften Ausgestaltung an dem Lademittel, insbesondere einem Ladeboden. In einer anderen Ausgestaltung weist das Lademittel, insbesondere der Ladeboden Schienen auf, welche mit einem am Fahrzeug gelagerten Sperrelement zusammenwirken.

In einer anderen Ausgestaltung der Erfindung ist das Sperrelement als Sperrklinke gestaltet, welche um eine in Z-Richtung weisende Achse schwenkbar ist. Die Sperrklinke ist dabei derart gestaltet, dass sie in der ersten Position in der Schiene ausrichtbar ist und in der zweiten Position unter Führungsbereiche der Schiene greift. Die Sperrklinke kann zusätzliche Rastmittel aufweisen, welche eine Bewegung im verriegelten Zustand in Längsrichtung der Schiene verhindern.

In Weiterbildung der Erfindung weist die Sperrklinke einen Hebel auf, der mit dem Betätigungselement zusammenwirkt. Durch den Hebel ist eine sichere Betätigung der Sperrklinke einfach realisierbar.

In Weiterbildung der Erfindung ist der Stift an einem der Sperrklinke gegenüberliegenden Ende des Hebels angeformt. Dadurch ist eine günstige Bauform des Hebels und der Sperrklinke möglich.

In weiterer Ausgestaltung der Erfindung ist ein Führungselement vorgesehen, durch dass die Sperrklinke bei Bewegung in und/oder entgegen der Öffnungsrichtung in Z-Richtung verschiebbar ist. Durch die Bewegung in Z-Richtung wird die Sperrklinke bei einer Bewegung entgegen der Öffnungsrichtung gegen die Schiene in Z-Richtung verspannt. Dadurch ist eine Geräuschentwicklung aufgrund von "Klappern" der Sperrklinke in der verriegelten zweiten Position verhinderbar und somit ein Komfort, insbesondere bei einer Anbringung ohne Belastung in einem Fahrzeug mit einem offenen Laderaum, erhöht.

In weiterer Ausgestaltung der Erfindung umfasst das Führungselement eine schiefe Ebene, entlang welcher die Sperrklinke bei einer Bewegung in die und/oder entgegen der Öffnungsrichtung verschiebbar ist. Die schiefe Ebene erlaubt ein stetiges Anheben oder Absenken der Sperrklinke beim Ver- und/oder Entriegeln.

In weiterer Ausgestaltung der Erfindung wirkt die Vorrichtung mit zwei an dem Fahrzeugboden angeordneten Schienen zusammen. Die Schienen sind beispielsweise in den Fahrzeugboden eingelassen oder auf diesem befestigt. Dabei ist ein beliebiges Lastmittel, beispielsweise ein Lastboden, eine Lastöse oder ein Rückhaltenetz, durch die erfindungsgemäße Vorrichtung an der Schiene befestigbar.

In einer vorteilhaften Ausgestaltung ist das Lademittel ein Ladeboden. Durch den Ladeboden sind schwere Gegenstände auf einfache Weise auch in großen Laderäumen verstaubar.

In Weiterbildung der Erfindung ist das Betätigungselement an einem Ladeboden derart angeordnet, dass es für eine Bewegung in Entriegelrichtung durch den Ladeboden geführt ist. Das Betätigungselement ist beispielsweise verschieblich an dem Ladeboden gelagert, so dass keine weiteren Führungselemente zur Führung des Betätigungselements notwendig sind.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritten, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1: eine perspektivische Darstellung eines Laderaums eines Kraftfahrzeugs mit einem Ladeboden,
- Fig. 2: eine perspektivische Unteransicht auf einen Ladeboden,
- Fig. 3: eine Draufsicht auf ein erstes Ausführungsbeispiel einer erfindungsgemäßen Vorrichtung umfassend zwei Sperrklinken, welche in einer zweiten, verriegelten Position angeordnet sind,
- Fig. 4: eine Draufsicht auf die Vorrichtung gemäß Fig. 3, wobei die Sperrklinken in einer ersten, entriegelten Position angeordnet sind,
- Fig.5: eine Seitenansicht der Vorrichtung gemäß Fig. 3 in der verriegelten Position,
- Fig. 6: eine geschnittene Seitenansicht der Vorrichtung gemäß Fig. 3, in der entriegelten Position,
- Fig. 7: eine teilweise geschnittene perspektivische Darstellung der Vorrichtung gemäß Fig. 3,
- Fig. 8: eine teilweise geschnittene perspektivische Darstellung eines zweiten Ausführungsbeispiels einer erfindungsgemäßen Vorrichtung,
- Fig. 9: eine geschnittene Vorderansicht der Vorrichtung gemäß Fig. 8,
- Fig. 10: eine geschnittene Vorderansicht einer ersten Variante der Vorrichtung gemäß Fig. 8;
- Fig. 11: eine geschnittene Vorderansicht einer zweiten Variante der Vorrichtung gemäß Fig. 8;
- Fig. 12: eine teilweise geschnittene perspektivische Darstellung einer nicht zur Erfindung gehörenden Vorrichtung,
- Fig. 13: eine geschnittene Vorderansicht der Vorrichtung gemäß Fig. 12, wobei ein Rasthaken in einer Sperrposition angeordnet ist, und
- Fig. 14: eine geschnittene Vorderansicht der Vorrichtung gemäß Fig. 12, wobei der Rasthaken in einer entriegelten Position angeordnet ist.

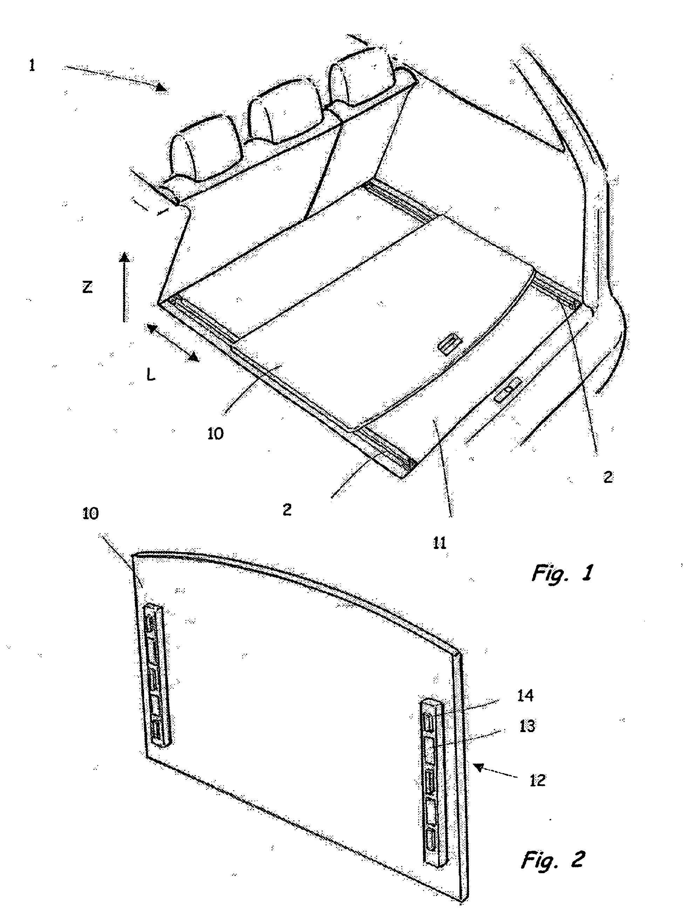

Fig. 1 zeigt schematisch einen Laderaum eines Kraftfahrzeugs 1 mit einem Ladeboden 10. Das dargestellte Kraftfahrzeug 1 ist ein sogenanntes Kombifahrzeug mit einem zur Fahrgastzelle offenen Laderaum. Selbstverständlich ist eine erfindungsgemäße Vorrichtung auch in einem anderen Kraftfahrzeugtyp einsetzbar. An einem Fahrzeugboden 11 des Kraftfahrzeugs 1 sind Schienen 2 vorgesehen, in welchen der Ladeboden 10 verschieblich einsetzbar ist. Der Ladeboden 10 ist dabei durch einen in Fig. 1 nicht sichtbaren Mechanismus an den Schienen 2 befestigbar, wobei durch den Mechanismus ein Verschieben des Ladebodens 10 in eine Längsrichtung L der Schienen 2 sowie in eine Z-Richtung zur Entnahme des Ladebodens 10 verhindert ist. In dem dargestellten Ausführungsbeispiel sind zwei annähernd parallel angeordnete Schienen 2 vorgesehen.

Fig. 2 zeigt schematisch eine Ansicht auf eine Unterseite des Ladebodens 10. Der dargestellte Ladeboden 10 weist zwei Trägerelemente 12 auf, an welchen Schienenführungen 13 ausgeformt sind. Durch die Schienenführungen 13 ist der Ladeboden 10 in die in Fig. 1 dargestellten Schienen 2 einsetzbar und in diesen verschieblich. In den Trägerelementen 12 ist ein in Fig. 2 nicht dargestellter Mechanismus zum Fixieren des Ladebodens 10 an den Schienen 2 eingebaut. Der Mechanismus umfasst in Fig. 2 nicht dargestellte Sperrelemente, welche aus Ausnehmungen 14 hervorstehen und mit den Schienen 2 verriegelt werden können.

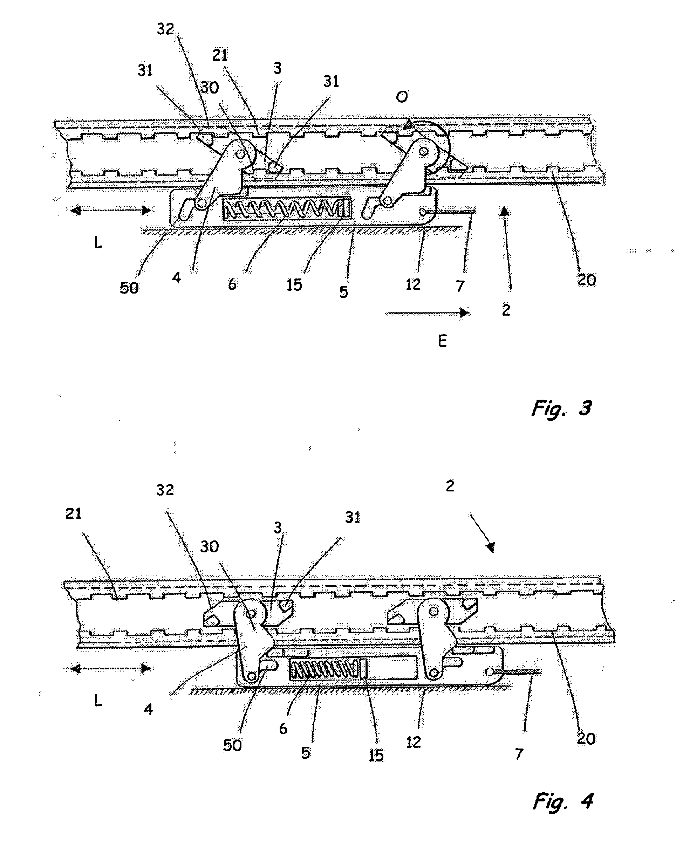

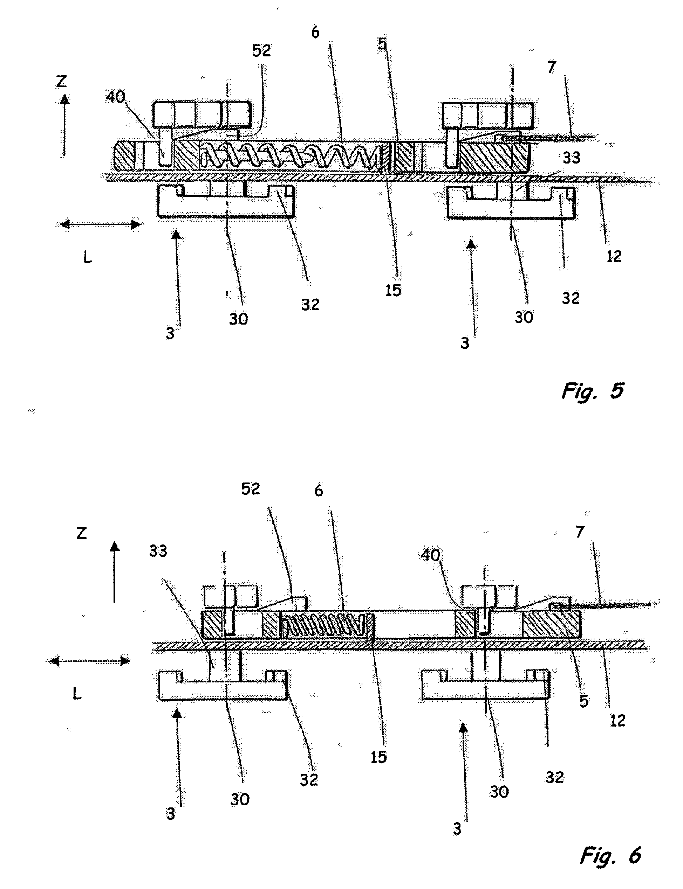

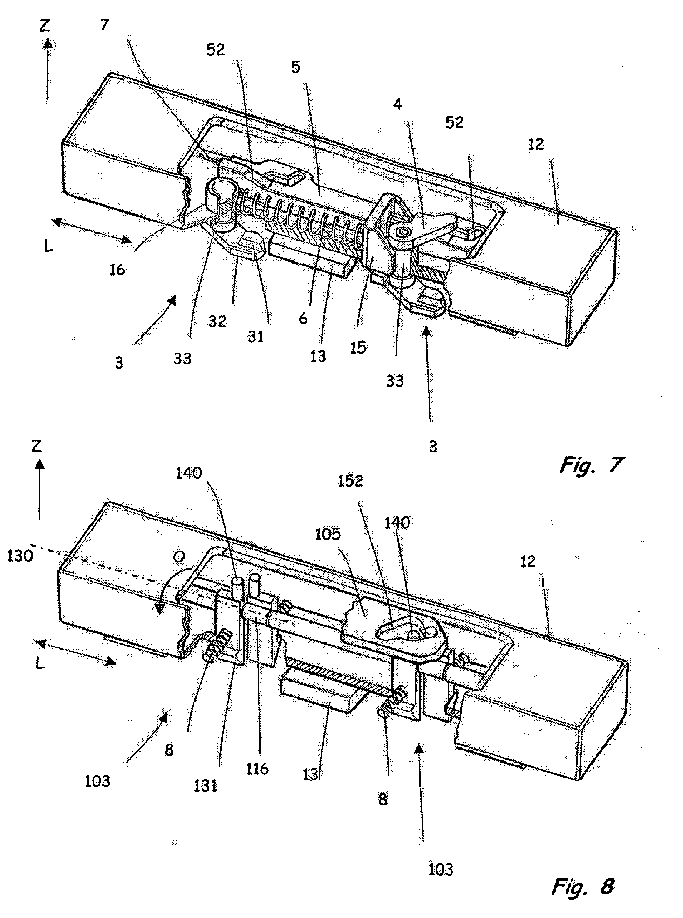

Fig. 3 bis 6 zeigen schematisch ein erstes Ausführungsbeispiel einer erfindungsgemäßen Vorrichtung zum Fixieren des Ladebodens 10 an den Schienen 2 umfassend als Sperrklinken 3 ausgeformt Sperrelemente. Dabei zeigen Fig. 3 und 5 die Sperrklinke 3 in einer verriegelten Position und Fig. 4 und 6 die Sperrklinke 3 in einer entriegelten Position. Fig. 7 ist eine teilweise freigeschnittene perspektivische Darstellung der Vorrichtung gemäß Fig. 3 im verriegelten Zustand.

Die Vorrichtung zum Fixieren des Ladebodens 10 oder eines anderen Lademittels umfasst in der dargestellten Ausführungsform zwei Sperrklinken 3, welche über in Fig. 7 sichtbare Bolzen 33 in Buchsen 16 so an dem Trägerelement 12 gelagert sind, dass sie um eine zur Z-Richtung parallele Drehachse 30 schwenkbar sind. Der Ladeboden 10 gemäß Fig. 2 ist dabei so an den Schienen 2 anbringbar, dass die Sperrklinken 3 in den Schienen 2 angeordnet werden.

Die Sperrklinke 3 ist derart ausgebildet, dass sie in der in Fig. 3 und 4 dargestellten, verriegelten Position unter entsprechende Führungsbereiche 20 der Schiene 2 greift. Die Schiene 2 und die Sperrklinken 3 weisen zueinander komplementäre Rastnasen 31, 21 auf, welche in der in Fig. 3 und 4 dargestellten, verriegelten Position ineinander greifen. Die Rastnasen 21 der Schiene 2 sind dabei in Form einer Rechteckwelle angeordnet, so dass eine Verrastung an einer Vielzahl an Position in der Schiene 2 möglich ist. Die dargestellten Sperrklinken 3 sind weiter derart gestaltet, dass in der in Fig. 3 und 4 dargestellten, verriegelten Position eine Flanke 32 an der Schiene 2 anliegt. Durch ein Zusammenwirken dieser Elemente wird erreicht, dass die Sperrklinken 3 in der in Fig. 3 und 4 dargestellten verriegelten Position in der Schiene 2 in Längsrichtung L und in Z-Richtung verrastet sind

Zum Entsperren ist die Sperrklinke 3 um die in Z-Richtung weisende Achse 30 in eine Öffnungsrichtung O schwenkbar. Durch die Schwenkbewegung in Öffnungsrichtung O werden die Sperrklinken 3 in der Schiene 2 ausgerichtet, so dass der in Fig. 2 dargestellte Ladeboden 10 relativ zu den Schienen 2 verschoben und/oder aus den Schienen 2 entnommen werden kann.

Die dargestellten Sperrklinken 3 sind über die Bolzen 33 jeweils fest mit Hebeln 4 verbunden und über diese Hebel 4 in die Öffnungsrichtung O schwenkbar bzw. aus der entriegelten Position gemäß Fig. 4 und 6 in die verriegelte Position gemäß Fig. 3 und 5 bewegbar. Ein ungewünschtes Bewegen der Sperrklinke 3 ist erfindungsgemäß durch ein Betätigungselement 5 verhindert, welches mit den Hebeln 4 zusammenwirkt.

Nur bei einer Betätigung des Betätigungselements 5, d.h. in dem Ausführungsbeispiel bei einem Verschieben des Betätigungselements 5 in eine Entriegelrichtung E, ist eine Bewegung der Sperrklinken 3 in Öffnungsrichtung O und damit ein Bewegen des mit den Sperrklinken 3 wirkverbundenen Ladebodens 10 oder eines anderen, nicht dargestellten Lademittels möglich. Dadurch ist eine hohe Sicherheit gegen eine ungewünschte Bewegung des Lademittels gewährleistet.

Die Hebel 4 sind jeweils durch einen Stift 40 in einer Kulissenführung 50 des Betätigungselements 5 gelagert. Die dargestellten Kulissenführungen 50 sind im Wesentlichen L-förmig mit einem ersten Bereich, welcher parallel zur Bewegungsrichtung des Betätigungselements 5 verläuft. Bei einer Verschiebung des dargestellten Betätigungselements 5 in eine durch einen Pfeil dargestellte Entriegelrichtung E relativ zu dem Ladeboden 10 und/oder den Schienen 2 wird der Stift 40 zunächst aufgrund der Verrastung der Sperrklinke 3 in der Schiene 2 nicht bewegt. Die Kulissenführung 50 wird jedoch relativ zu dem Stift 40 verfahren, so dass die Verriegelung des Stifts 40 durch das Betätigungselement 5 aufgehoben wird und die Sperrklinken 3 um die jeweilige Achse 30 geschwenkt werden. Eine Feder 6 wirkt einer Bewegung des Betätigungselements 5 in die Entriegelrichtung E entgegen. Die Feder 6 stützt sich in der dargestellten Ausführungsform gegen ein mit dem Trägerelement 12 ausgebildetes Anschlagelement 15 ab. In anderen Ausführungsformen sind alternativ oder zusätzlich weitere Anschlagmittel denkbar, welche beispielsweise fest mit dem Fahrzeugboden verbindbar sind und/oder an den Schienen ausgeformt sind. Durch Aufbringen einer Kraft, welche größer ist als die Rückstellkraft der Feder 6, ist das Betätigungselement 5 relativ zu dem Anschlagelement 15 in die Entriegelrichtung E verschiebbar. Ohne Verschieben des Betätigungselements 5 sperrt dieses jedoch eine Bewegung des Hebels 4 und damit auch eine Schwenkbewegung der mit dem Hebel 4 verbundenen Sperrklinke 3.

Das dargestellte Betätigungselement 5 wird bei einer Verschiebung in die oder entgegen der Entriegelrichtung E durch die Schiene 2 sowie das Trägerelement 12 geführt. Eine Bewegung des Betätigungselements 5 erfolgt in der dargestellten Ausführungsform mittels eines Zugseils 7. Das Zugseil 7 kann dabei über nicht dargestellte Rollen umgelenkt sein. Anstelle eines einfachen Zugseils 7 ist es auch denkbar, einen Bowden-Zug oder ein ähnliches Mittel einzusetzen.

An dem Bestätigungselement 5 sind als schiefe Ebenen ausgeformte Führungselemente 52 vorgesehen. Durch die zwei Führungselemente 52 werden die zwei Hebel 4 und damit die jeweils fest mit dem Hebel 4 verbundenen Sperrklinken 3 bei einer Bewegung entgegen die Entriegelrichtung E in Z-Richtung verschoben und so mit der Schiene 2 verspannt. Dadurch wird eine Geräuschentwicklung, ein sogenanntes "Klappern", aufgrund eines für die Schwenkbewegung notwendigen Spiels verhindert. Die dargestellten, als schiefe Ebenen gestalteten Führungselemente 52 erlauben eine gute und stetige Führung beim Verschieben. Es sind auch andere Führungselemente denkbar, beispielsweise mit bogenförmigen Führungsflächen.

Wie in Fig. 7 erkennbar, weist das dargestellte Trägerelement 12 weiter Schienenführungen 13 auf, durch welche der Ladeboden 10 in der Schiene 2 geführt ist.

Durch die dargestellte Vorrichtung ist ein Ladeboden 10 an einer beliebigen Position in Längsrichtung L an den Schienen 2 befestigbar bzw. von diesen entfernbar. Selbstverständlich ist es auch denkbar, die Schienen 2 an dem Lademittel vorzusehen und eine oder mehrere Sperrklinken 3 an dem Fahrzeugboden 11 zu lagern.

Fig. 8 zeigt ein zweites Ausführungsbeispiel einer erfindungsgemäßen Vorrichtung. Für gleiche oder ähnliche Bauteile werden dabei einheitliche Bezugszeichen verwendet. Auf eine Beschreibung dieser Bauteile wird verzichtet. Bei der Vorrichtung gemäß Fig. 8 ist in dem Trägerelement 12 ein als Rasthaken 103 ausgestaltetes Sperrelement um eine zur Längsrichtung L parallele Schwenkachse 130 mittels Hülsen 116 schwenkbar gelagert. Die Rasthaken 103 weisen Rastnasen 131 auf, welche Führungsbereiche einer nicht dargestellten Schiene hintergreifen können. Durch eine Schwenkbewegung in die durch einen Pfeil angedeutete Öffnungsrichtung O werden die Rasthaken 103 so verschwenkt, dass die Rastnasen 131 von den Führungsbereichen gelöst werden. An dem Rasthaken 103 sind Stifte 140 angebracht. Die Stifte 140 weisen in Z-Richtung und sind in Kulissenführungen 152 eines Betätigungselements 105 geführt. In der dargestellten Anordnung verhindert die Kulissenführung 152 eine Schwenkbewegung der Rasthaken 103 in Öffnungsrichtung O. Durch Verschiebung des Betätigungselements 105 werden aufgrund von Federn 8 die Rasthaken 103 in die Öffnungsrichtung O verschwenkt und dadurch eine Verriegelung gelöst.

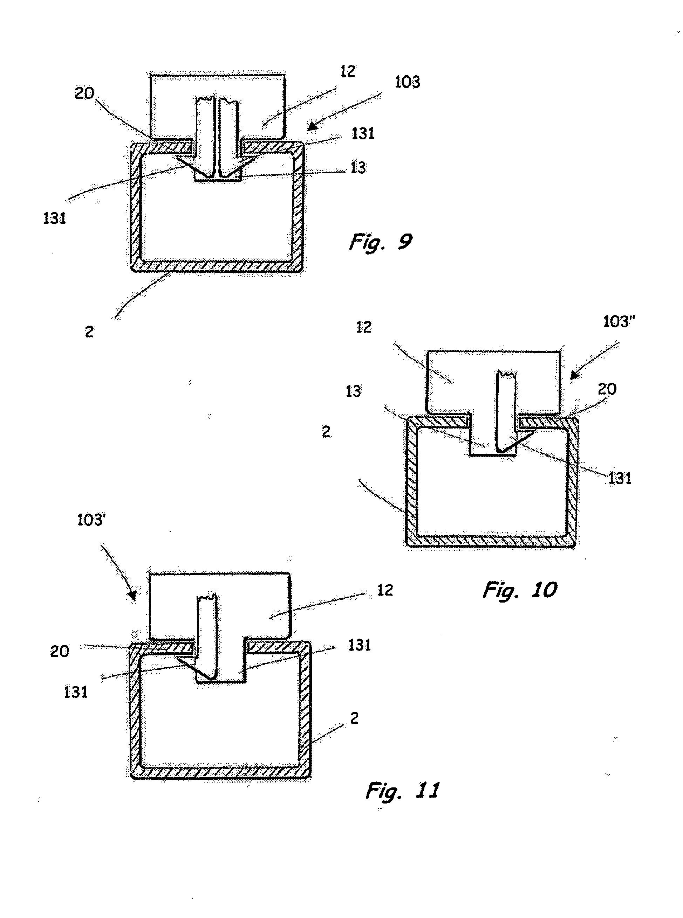

Fig. 9 zeigt schematisch einen Teil der Vorrichtung gemäß Fig. 8, welcher auf einer Schiene 2 aufgesetzt ist. Die Rastnasen 131 hintergreifen dabei wie in Fig. 9 dargestellt Führungsbereiche 20 der Schiene 2.

Fig. 10 und 11 zeigen Varianten der Vorrichtung gemäß Fig. 8, wobei für gleiche Bauteile einheitliche Bezugszeichen verwendet werden. Die Vorrichtungen gemäß Fig. 10 und 11 weisen jeweils nur einen Rasthaken 103', 103" auf, welcher jeweils mittels Rastnasen 131 einen Führungsbereich 20 der Schiene 2 hintergreift. Aufgrund der Schienenführung 13 ist auch bei einer derartigen Ausgestaltung gewährleistet, dass das Trägerelement 12 und damit der Ladeboden 10 an dem Fahrzeugboden 11 zuverlässig gesichert ist.

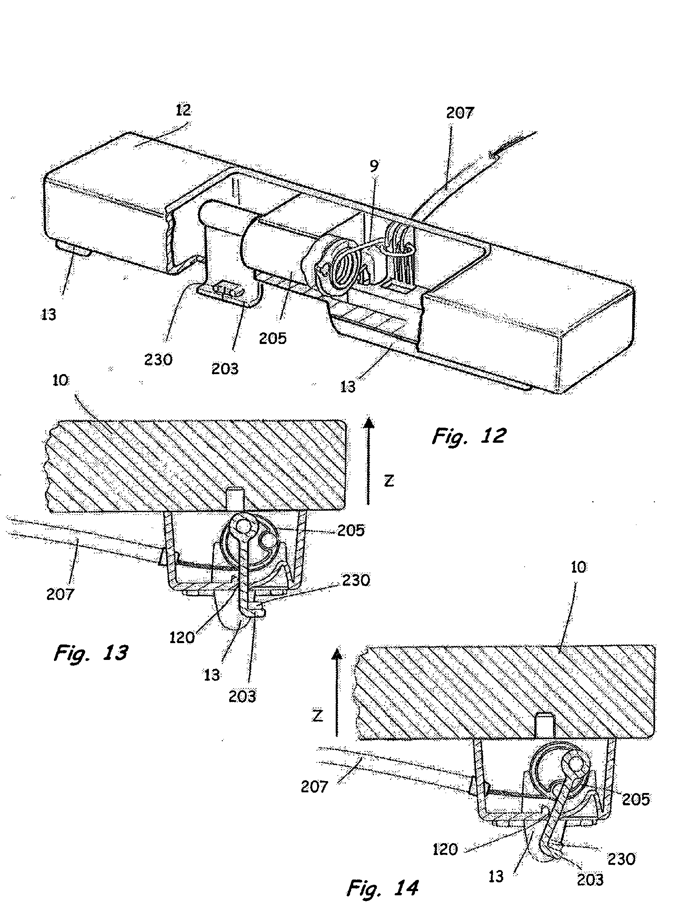

Die Fig. 12 bis 14 zeigen schematisch eine nicht zur Erfindung gehörende Vorrichtung. Für gleiche oder ähnliche Bauteile werden dabei einheitliche Bezugszeichen verwendet und auf eine Beschreibung dieser Bauteile wird verzichtet. Fig. 12 zeigt die Vorrichtung in einer teilweise geschnittenen perspektivischen Darstellung. Die Fig. 13 und 14 zeigen die Vorrichtung in einer geschnittenen Vorderansicht, wobei ein als Rasthaken 203 gestaltetes Sperrelement in Fig. 13 in einer zweiten Position angeordnet ist, in welcher der Rasthaken 203 entsprechende, in den Fig. 12 bis 14 nicht dargestellte Führungsbereiche einer Schiene hintergreifen kann, und Fig. 14 den Rasthaken 203 in einer ersten Position zeigt, in welcher das Sperrelement aus einer Schiene entnehmbar ist.

Die in den Fig. 12 bis 14 dargestellte Vorrichtung umfasst ein Trägerelement 12, welches, wie in den Fig. 13 und 14 schematisch dargestellt ist, an einem Laderaumboden 10 befestigbar ist. An dem Trägerelement 12 sind Schienenführungen 13 ausgeformt, durch welche das Trägerelement 12 und damit der Ladeboden 10 in die in Fig. 1 dargestellte Schienen 2 einsetzbar und in diesen verschieblich lagerbar ist. Das als Rasthaken 203 gestaltete Sperrelement greift zum Verriegeln unter den Führungsbereich der nicht dargestellten Schiene. Das dargestellte Rastelement 203 ist zu diesem Zweck mit speziellen Rastbereichen 230 gestaltet, welche eine sichere Verrastung ermöglichen. Die Rastbereiche 230 sind beispielsweise speziell beschichtet, so dass eine hohe Haftreibung zwischen den Rastbereichen 230 und den nicht dargestellten Schienen bewirkt wird. In anderen Ausgestaltungen sind die Rastbereiche 230 aus einem hierfür geeigneten Material gestaltet und/oder speziell geformt.

Der Rasthaken 203 ist an einem als Exenterwelle 205 gestalteten Betätigungselement gelagert. Der Rasthaken 203 ist weiter in einer geeigneten bodenseitigen Öffnung 120 des Trägerelements 12 geführt. Die dargestellte Öffnung 120 weist in Richtung der Schienenführung 13 und ist in Querrichtung der Schienen versetzt zu der Schienenführung 13 angeordnet. Die Exzenterwelle 205 ist durch eine Rückholfeder 9 belastet, so dass die Exzenterwelle 205 in die in Fig. 13 dargestellte Position gezwungen ist. Selbst hohe an den Rasthaken 203 in Z-Richtung angreifende Kräfte bewirken kein Verschwenken des Rasthakens 203. Dagegen ist durch das als Bowdenzug 207 in der dargestellten Ausführungsform gestaltete Zugmittel die Exzenterwelle 205 entgegen der Kraft der Ringfeder 9 verdrehbar. Der exzentrisch an der Exzenterwelle 205 angeordnete Rasthaken 203 führt durch die Zwangsführung in der Öffnung 120 des Trägerelements 12 eine Kippbewegung aus, so dass der Rasthaken 203 mit den Schienenführungen 13 fluchtet und dadurch die Vorrichtung entriegelt ist.

## Patentansprüche

1. Vorrichtung zum Fixieren eines Lademittels an einem Fahrzeugboden (11) umfassend mindestens ein in einer Schiene (2) zwischen mindestens einer ersten Position und einer zweiten Position bewegbar anordenbares Sperrelement (3, 103), wobei das Sperrelement (3, 103) in der ersten Position so angeordnet ist, dass das Sperrelement (3, 103) aus der Schiene (2) in Z-Richtung entnehmbar ist, das Sperrelement (3, 103, 203) in der zweiten Position so angeordnet ist, dass das Sperrelement (3, 103) zumindest teilweise Führungsbereiche (20) der Schiene (2) in Z-Richtung hintergreift, und das Sperrelement (3, 103) in eine Öffnungsrichtung (O) aus der zweiten Position in die §rste Position bewegbar ist, wobei eine Öffnungsbewegung des Sperrelements (3, 103) in die Öffnungsrichtung (O) durch ein Betätigungselement (5, 105) gesperrt ist und das Betätigungselement (5, 105) in eine Entriegelrichtung (E) bewegbar, insbesondere verschieblich und/oder verdrehbar ist, um die Öffnungsbewegung zu entsperren, **dadurch gekennzeichnet, dass** das Betätigungselement (5, 105) eine Kulissenführung (50, 152) aufweist, in welcher ein Stift (40, 140) zur Bewegung des Sperrelements (3, 103) gelagert ist, und dass die Kulissenführung (50, 152) L-förmig oder nach Art einer Herzkurve gestaltet ist.

2. Vorrichtung nach Anspruch 1, **dadurch gekennzeichnet, dass** das Sperrelement (3, 103) in die Öffnungsrichtung (O) verschwenkbar ist.

3. Vorrichtung mit einer L-förmigen kulissenführung (50) nach Anspruch 1 oder 2 **dadurch gekennzeichnet, dass** das Sperrelement als Sperrklinke (3) gestaltet ist, welche um eine in Z-Richtung weisende Achse (30) schwenkbar ist, und dass ein Führungselement (52) vorgesehen ist, durch das die Sperrklinke (3) bei Bewegung in und/oder entgegen der Öffnungsrichtung (O) in Z-Richtung verschiebbar ist, wobei das Führungselement (52) insbesondere eine schiefe Ebene umfasst, entlang welcher die Sperrklinke (3) bei einer Bewegung in die und/oder entgegen der Öffnungsrichtung (O) verschiebbar ist.

4. Vorrichtung nach Anspruch 3, **dadurch gekennzeichnet, dass** die Sperrklinke (3) einen Hebel (4) aufweist, der mit dem Betätigungselement (5) zusammenwirkt.

5. Vorrichtung nach Anspruch 4, **dadurch gekennzeichnet, dass** der Stift (40) zur Bewegung der Sperrklinke (3) an einem der Sperrklinke (3) gegenüberliegenden Ende des Hebels (4) angeformt ist.

6. Vorrichtung nach einem der Ansprüche 1 bis 5, **dadurch gekennzeichnet, dass** das Betätigungselement (5, 105) entgegen einer Bewegung in Entriegelrichtung (E) und/oder das Sperrelement (3, 103) entgegen einer Bewegung in Öffnungsrichtung (O) durch mindestens ein Kraftelement, insbesondere eine Feder (6, 8, 9), belastet ist/sind.

7. Vorrichtung nach einem der Ansprüche 1 bis 6, **dadurch gekennzeichnet, dass** das Betätigungselement (5, 105) mittels einem Seil (7), einem Bowden-Zug oder dergleichen bewegbar ist.

8. Vorrichtung nach einem der Ansprüche 1 bis 7, **dadurch gekennzeichnet, dass** die Vorrichtung mit zwei, an dem Fahrzeugboden (11) angeordneten Schienen (2), zusammenwirkt.

9. Vorrichtung nach einem der Ansprüche 1 bis 8, **dadurch gekennzeichnet, dass** das Lademittel ein Ladeboden (10) ist.

10. Vorrichtung nach Anspruch 9, **dadurch gekennzeichnet, dass** das Betätigungselement (5) an dem Ladeboden (10) derart angeordnet ist, dass es für eine Bewegung in Entriegelrichtung (E) durch den Ladeboden (10) geführt ist.

## Claims

1. Device for retaining of a transport container on a vehicle floor (11) comprising at least one blocking element (3, 103) that can be arranged movable inside a rail (2) between at least one first position and a second position, where the blocking element (3, 103) is arranged in the first position such that the blocking element (3, 103) can be removed from the rail (2) in the Z direction, the blocking element (3, 103, 203) is arranged in the second position such that the blocking element (3, 103) grips at least partially around guide areas (20) of the rail (2) in the Z direction, and the blocking element (3, 103) can be moved in an opening direction (O) from the second position into the first position, where an opening movement of the blocking element (3, 103) in the opening direction (O) is blocked by an actuating element (5, 105) and the actuating element (5, 105) can be moved, in particular slid and/or rotated, in an enabling direction (E) in order to unblock the opening movement, **characterized in that** the actuating element (5, 105) has a sliding block guide (50, 152) in which a pin (40, 140) is mounted for movement of the blocking element (3, 103) and **in that** the sliding block guide (50, 152) is designed L-shaped or cardioid-shaped.

2. Device according to Claim 1, **characterized in that** the blocking element (3, 103) can be swivelled in the opening direction (O).

3. Device according to Claim 1 or 2 having an L-shaped sliding block guide (50), **characterized in that** the blocking element is designed as a blocking pawl (3) which can be swivelled about an axis (30) pointing in the Z direction, and **in that** a guide element (52) is provided through which the blocking pawl (3) can be slid in the Z direction during movement in and/or against the opening direction (O), where the guide element (52) comprises in particular an inclined plane along which the blocking pawl (3) can be slid during a movement in and/or against the opening direction (O).

4. Device according to Claim 3, **characterized in that** the blocking pawl (3) has a lever (4) interacting with the actuating element (5).

5. Device according to Claim 4, **characterized in that** the pin (40) for movement of the blocking pawl (3) is integrally cast at an end of the lever (4) opposite the blocking pawl (3).

6. Device according to one of Claims 1 to 5, **characterized in that** the actuating element (5, 105) is loaded against a movement in the enabling direction (E) and/or the blocking element (3, 103) is loaded against a movement in the opening direction (O) by at least one force element, in particular a spring (6, 8, 9).

7. Device according to one of Claims 1 to 6, **characterized in that** the actuating element (5, 105) can be moved by means of a cable (7), a Bowden cable or the like.

8. Device according to one of Claims 1 to 7, **characterized in that** the device interacts with two rails (2) arranged on the vehicle floor (11).

9. Device according to one of Claims 1 to 8, **characterized in that** the transport container is a loading floor (10).

10. Device according to Claim 9, **characterized in that** the actuating element (5) is arranged on the loading floor (10) such that it is guided for a movement in the enabling direction (E) by the loading floor (10).

## Revendications

1. Dispositif de fixation d'un moyen de chargement sur un plancher de véhicule (11), comprenant au moins un élément d'arrêt (3, 103) pouvant être disposé dans un rail (2) et déplacé entre au moins une première position et une deuxième position, l'élément d'arrêt (3, 103) étant, dans la première position, disposé de telle manière que l'élément d'arrêt (3, 103) peut être retiré du rail (2) dans la direction Z, l'élément d'arrêt (3, 103, 203) étant, dans la deuxième position, disposé de telle manière que l'élément d'arrêt (3, 103) s'engage en prise arrière au moins en partie dans des sections de guidage (20) du rail (2) dans la direction Z, et l'élément d'arrêt (3, 103) pouvant être déplacé de la deuxième position à la première position dans un sens d'ouverture (O), sachant qu'un mouvement d'ouverture de l'élément d'arrêt (3, 103) dans le sens d'ouverture (O) est bloqué par un élément d'actionnement (5, 105), et que l'élément d'actionnement (5, 105) est mobile dans un sens de déverrouillage (E), en particulier mobile par translation et/ou torsion, afin de débloquer le mouvement d'ouverture, **caractérisé en ce que** l'élément d'arrêt (5, 105) présente un guide-coulisse (50, 152) dans lequel est logée une cheville (40, 140) destinée à mouvoir l'élément d'arrêt (3, 103), et que le guide-coulisse (50, 152) est conçu en forme de L ou à la manière d'une cardioïde.

2. Dispositif selon la revendication 1, **caractérisé en ce que** l'élément d'arrêt (3, 103) est pivotant dans le sens d'ouverture (O).

3. Dispositif avec un guide-coulisse en forme de L (50) selon la revendication 1 ou 2, **caractérisé en ce que** l'élément d'arrêt est conçu en tant que cliquet d'arrêt (3) qui peut être pivoté autour d'un axe (30) orienté selon la direction Z, et qu'est prévu un élément de guidage (52) au moyen duquel le cliquet d'arrêt (3) peut être déplacé dans la direction Z lors d'un mouvement dans le sens d'ouverture (O) et/ou inverse, l'élément de guidage (52) comprenant en particulier un plan incliné le long duquel le cliquet d'arrêt (3) peut être déplacé lors d'un mouvement dans le sens d'ouverture (O) et/ou inverse.

4. Dispositif selon la revendication 3, **caractérisé en ce que** le cliquet d'arrêt (3) présente un levier (4) qui agit en interaction avec l'élément d'actionnement (5).

5. Dispositif selon la revendication 4, **caractérisé en ce que** la cheville (40) destinée à mouvoir le cliquet d'arrêt (3) est formée à une extrémité du levier (4) opposée au cliquet d'arrêt (3).

6. Dispositif selon l'une des revendications 1 à 5, **caractérisé en ce que** l'élément d'actionnement (5, 105), dans le sens inverse d'un mouvement dans le sens de déverrouillage (E), et/ou l'élément d'arrêt (3, 103), dans le sens inverse d'un mouvement dans le sens d'ouverture (O), est/sont soumis à une charge par au moins un élément de force, en particulier un ressort (6, 8, 9).

7. Dispositif selon l'une des revendications 1 à 6, **caractérisé en ce que** l'élément d'actionnement (5, 105) peut être déplacé au moyen d'une corde (7), d'un câble Bowden ou d'un élément similaire.

8. Dispositif selon l'une des revendications 1 à 7, **caractérisé en ce que** le dispositif agit en interaction avec deux rails (2) disposés sur le plancher de véhicule (11).

9. Dispositif selon l'une des revendications 1 à 8, **caractérisé en ce que** le moyen de chargement est un plancher de chargement (10).

10. Dispositif selon la revendication 9, **caractérisé en ce que** l'élément d'actionnement (5) est disposé de telle manière sur le plancher de chargement (10) qu'il est guidé par le plancher de chargement (10) pour un mouvement dans le sens de déverrouillage (E).
